# EUROPEAN PATENT SPECIFICATION

(11) **EP 3 715 727 B1**
(45) Date of publication and mention of the grant of the patent: **30.11.2022**
(21) Application number: 19166127.1
(22) Date of filing: 29.03.2019
(51) Int. Cl.: F24D 17/00, F24D 17/02, F24D 19/10

(54) **HEAT PUMP ASSISTED MULTISTAGE WASTE WATER HEAT RECOVERY DEVICE**
WÄRMEPUMPENUNTERSTÜTZTE MEHRSTUFIGE ABWASSERWÄRMERÜCKGEWINNUNGSVORRICHTUNG
DISPOSITIF DE RÉCUPÉRATION DE CHALEUR D'EAUX USÉES À PLUSIEURS ÉTAPES ASSISTÉ PAR POMPE À CHALEUR

(43) Date of publication of application: 30.09.2020
(73) Proprietor: Mitsubishi Electric R&D Centre Europe B.V., Livingston EH54 5DJ (GB); Mitsubishi Electric Corporation, Tokyo 100-8310 (JP)
(72) Inventor: Salvador, Michael, Livingston, EH54 5DJ (GB)
(74) Representative: Pfenning, Meinig & Partner mbB

(56) References cited:
- EP-A2- 2 345 851
- WO-A1-2017/050623
- CA-A1- 2 550 281
- GB-A- 2 304 877

## Description

The invention relates to a waste water heat recovery device, in particular a waste water heat recovery device comprising a first waste water heat recovery unit connected to a waste water line and to a process water line, where the first waste water heat recovery unit comprises a heat exchanger to transfer heat from waste water in the waste water line to process water in the process water line, and a second waste water heat recovery unit connected to the waste water line, downstream of the first waste water heat recovery unit, and the process water line, downstream of the first waste water heat recovery unit, where the second waste water heat recovery unit comprises a heat pump to transfer heat from waste water in the waste water line to process water in the process water line.

Heating, ventilation, and air conditioning (HVAC) in buildings account for around 25 percent of global energy consumption, with domestic hot water (DHW) accounting for 20 percent of total energy consumption in the building. Under new and upcoming building regulations aimed at improving a building's thermal envelope and air tightness, DHW will account for around 50 percent of the energy consumption in new building stocks by 2030.

Several technologies already exist for producing DHW, for example, solar thermal systems or heat pumps. However, both of these have some disadvantages, such as lack of sufficient roof space to fit solar panels, and the electric energy consumed by heat pumps, as well as their need for a bore hole as the heat source and/or a spot or pitch upon which to install a corresponding outdoor unit.

One solution which can overcome said disadvantages is the recovery of energy from waste hot water (WHW) using waste water heat recovery systems or devices (WWHRS). Such systems or devices are usually based on heat transfer from WHW to cold (process) water circuits in order to preheat them, and they can be installed inside dwellings.

As an example, US 2 575 325 A discloses such a waste water heat recovery system with a heat exchanger connected to a waste hot water line and a heat pump connected to the heat exchanger.

WO 2017/050623 A1 describes a device for producing domestic hot water by heat recovery from waste water, comprising a waste water discharge circuit, a circuit for heating domestic cold water to produce domestic hot water, a first heat exchanger arranged on the waste water circuit configured to transfer heat from the waste water to the domestic cold water, resulting in preheated cold water, a heat pump comprising an evaporator and a condenser, configured to heat the preheated cold water to produce domestic hot water, the evaporator being arranged on the waste water circuit downstream from and in series with the first heat exchanger, the condenser being arranged on the heating circuit downstream from and in series with the first heat exchanger so as to heat preheated water from the first heat exchanger, the device comprising a priming circuit configured to supply domestic cold water to the evaporator of the heat pump, and the device not comprising storage of either domestic hot water or waste water.

GB 2304877 A discloses a water supply heat recovery where incoming water passes through the primary circuit of the heat exchanger into a storage vessel having means for heating the water therein. Hot water is drawn off from the vessel as required and passes to waste after use, and the path to waste incorporates a pump arrangement for diverting waste water to a thermally insulated reservoir. Water passes from the reservoir through a secondary circuit of the heat exchanger, such that heat energy in the water passing to waste can be transferred to the incoming water. A pumped recirculation path exists between the storage vessel and the primary circuit of the heat exchanger. The pump can be thermostatically controlled so that it only runs when the temperature of the water flowing through the secondary circuit of the heat exchanger exceeds that of the incoming water supply to improve efficiency of the heat recovery.

EP 2345851 A2 discloses a hot water supply with a cleaning circuit.

The technical problem to be solved by the invention at hand may be considered to be how to improve the efficiency of a waste water heat recovery system or a waste water heat recovery device.

Said problem is solved by the subject-matter of the independent claims. Advantageous features and embodiments of the invention are apparent from the dependent claims, the description, and the figures.

One aspect of the invention relates to a waste water heat recovery device or system (WWHRD/WWHRS). Such a device comprises a first waste water heat recovery unit (WWHRU1) connected to or configured to be connected to a waste water line and to a process water line, where the first waste water heat recovery unit comprises a heat exchanger to transfer heat from waste water in the waste water line to process water in the process water line, and a second waste water heat recovery unit (WWHRU2) connected to or configured to be connected to the waste water line, downstream of the first waste water heat recovery unit, and to the process water line, downstream of the first waste water recovery unit, where the second waste water heat recovery unit comprises a heat pump to transfer heat from waste water in the waste water line to process water in the process water line.

So, during intended use, the process water will be, by the time it arrives at the second waste water heat recovery unit, preheated by the first waste water heat recovery unit. To preheat the process water, the heat exchanger of the first waste water heat recovery unit may be connected to or configured to be connected to the waste water line and the process water line. Correspondingly, the heat pump of the second waste water heat recovery unit may be connected to or configured to be connected to the waste water line and the process water line as well. In that case, the heat transfer from waste water to process water in the second waste water heat recovery unit may be referred to as direct heat transfer, whereas an indirect heat transfer from waste water to process water in the second waste water heat recovery unit may refer to a setting where heat is transferred from the waste water to the heat pump or from the heat pump to the process water by means of additional heat exchangers not part of the heat pump. For instance indirect heat transfer may take place if the heat pump is a ground source heat pump as further explained below.

The first waste water heat recovery unit comprises an auxiliary pump for pumping process water (to be heated by the heat exchanger) through the heat exchanger, where the first waste water heat recovery unit is configured to, in a passive first mode of operation, transfer heat from the waste water in the waste water line to process water in the process water line with deactivated auxiliary pump, for instance by use of a bypass, and, in an active second mode of operation, transfer heat from waste water in the waste water line to process water in the process water line with activated auxiliary pump.

This gives the advantage that in settings with a limited amount of heat available in the waste water, for instance if the waste water is only available for a short period of time, like when the waste water stems from a shower (which usually lasts only around six minutes) the used electric energy in the presented multistage system can be minimized while still achieving up to 90 percent heat recovery, for example when the shower in use is supplied by process water fed through and preheated by the WWHRD. As typically about 50 percent of the heat recovery takes place in the first stage, that means in the first waste water heat recovery unit using the heat exchanger, and another 25 to 40 percent of the heat recovery takes place in the second state, that means the second waste water heat recovery unit using the heat pump, the efficiency of the heat recovery is improved for the largest part of it. In the passive mode, for example the shower setting where process water is circulated through the WWRHD without requiring a pump, no electricity is needed for the auxiliary pump, and, in addition, it is also efficient to recover heat from minor heat sources such as showers, kitchen sinks, or bathroom sinks.

At the same time, the device can be used to efficiently recover heat in settings with a larger amount of heat available in the waste water even if during the recovery of heat no process water is required as, in such a setting, the process water may be pumped through the WWHRU1 by the activated pump and (directly or via the WWHRU2) transferred to a thermal energy storage device, for instance. For instance when the waste water stems from a bath, the waste water has a large amount of heat. However, the heat is available for recovery only after the bath, which means that contrary to the shower setting, no process water is required by the bath when the recovered heat is available. Therefore, with deactivated pump, the WWHRU1 could not work with maximal effectivity as the heat is stuck in the WWHRU1, hindering the recovery of heat. With activated auxiliary pump, the heat is transferred out of the WWHRU1 which, consequently, can work at maximal effectivity.

The described device enables controlling and monitoring the heat recovery process to ensure efficiency and reliability as well as flexibility of the system, where, as described in more detail below, each stage of the system, that is, each unit of the device, may be "in line", that means, activated and/or controlled according to the specific heat available, that is, the specific temperature present at each stage so as to allow an optimal heat recovery from the waste water.

So, in the first heat recovery stage, the switchable active or passive stage, the water in the process line, for instance provided by a water main line or a thermal energy storage device, and the waste water in the waste water line have a maximal temperature difference ΔT, where the amount of available heat and further information, for example if heated process water is required by a domestic hot water user (DHWU) during the recovery process, can be used to determine whether it is more efficient to use the passive first mode of operation or the active mode of operation.

Furthermore, the described waste water heat recovery device gives the advantage that appliances draining hot water can easily be grouped together so that the collected waste water from all of the grouped appliances may be fed into the waste water heat recovery device. This serves to maximize heat recovery in a household or a number of households efficiently with, for instance, only one waste water heat recovery device. So, the described two-stage assisted heat recovery device can also be used for large applications such as multi-family buildings and can preferably, in such a setting, be integrated with a large-scale ground source heat pump to cut installation costs further. Also, such a two-stage assisted heat recovery device can be used for large consumers, such as public swimming pools.

According to the invention, the first waste water heat recovery unit is configured to automatically switch from the passive mode of operation to the active mode of operation if a corresponding preset or presettable criterion is met. Said criterion can be preset in the production process, or be presettable in the sense of adjustable by an user or a control unit. This also applies to the preset or presettable criteria/temperatures/values mentioned below.

Therein, the preset presettable criterion for switching between passive and active mode may comprise that a temperature of waste water downstream of the heat exchanger of the first waste water heat recovery unit and, in particular, also upstream of the heat pump of the second waste water heat recovery unit, is higher than a first preset or presettable temperature and/or that a temperature difference between waste water upstream and downstream of the heat exchanger is lower than a preset difference. To this end, the WWHRU1 may comprise corresponding temperature sensors. The criterion for switching between the passive mode and the active mode in addition or alternatively, comprises that a temperature of waste water upstream of the heat exchanger is higher than a second preset or presettable temperature, and/or that waste water, in particular waste water of a temperature higher than another preset temperature, is flowing down the waste water line through the heat exchanger for longer than a preset or presettable time and/or waste water is flowing down the waste water line from a specific source such as a bath. The latter may be detected, for instance by monitoring, for example, a thermal energy storage device or the water flow in specific lines only connected to the corresponding source.

For example, it can be checked if the quantity of DHW taken from the thermal energy storage is over a defined threshold, and, if yes, the WWHRU1 may immediately switch to the active mode if a temperature of waste water upstream of the heat exchanger is higher than a preset temperature in a given time span, for example the next hour or the next two hours after the point in time where the DHW was taken from the thermal energy storage. The different preset or presettable temperatures may be identical or different from each other, depending on local regulations and preferences of users with respect to the temperature of the water used for different users such as showers, baths, or in the kitchen.

This gives the advantage that the heat recovery in the first stage, that is, the WWHRU1, can be controlled very closely and its efficiency can be increased. So, active heat recovery may be controlled by temperature sensors and is realised by the activated auxiliary pump. The auxiliary pump will then mainly be used to realize heat recovery for cases of large amounts of heat available in the waste water, for instance when a bath has been taken. For a lower amount of available heat, such as, for instance, when a shower is taken or when heated process water is required by a user at the time heat recovery takes place, the first waste water recovery unit may be used as a passive device, using check valves of the unit accordingly. The first heat recovery stage provides preheated process water, which can supply both the heating circuit and a mixer tab/valve. Supplying the mixer tab/valve with preheated process water will significantly reduce the amount of DHW needed in order to get the same amount of mixed hot water for a shower, a bath, or any other DHW appliances while the required amount of electricity for heat recovery is minimized in the first stage.

After the first stage, the temperature difference ΔT between preheated process water and waste water will be too low to extract heat with a simple heat exchanger alone. Therefore, in the second stage, the remaining heat of the waste water will be recovered by the heat pump and further increase the heat in the process water line. The corresponding cycle will operate at a high coefficience of performance (COP) compared to air-to-water heat pumps and can be interconnected with any water-to-water heat pump, for example a ground source heat pump. However, in the second stage the heat recovery will use electric energy.

In another advantageous embodiment, the second waste water heat recovery unit may be configured to automatically activate the heat pump only if another preset or presettable criterion is met, where the other criterion preferably comprises a temperature of waste water downstream of the heat pump of the second waste water heat recovery unit being higher than a third preset or presettable temperature, and/or a temperature of waste water upstream of the heat pump being higher than a fourth preset or presettable temperature and/or a temperature difference between waste water upstream of the heat pump and process water upstream of the heat pump being lower than a preset or presettable value. This implies that the second waste water heat recovery unit may be configured to automatically deactivate the heat pump if any of said components of the other criterion or any combination of said components of the other criterion are not met. In such a setting, the heat pump can also easily be controlled to avoid any blockages on the waste water heat recovery line by maintaining a minimal waste water temperature above 0°C (which avoids freezing) and at a temperature that complies with local regulations (which is set to 5°C in most European countries, for instance).

This gives the advantage that efficiency may be maximized as by monitoring the temperature of the waste hot water, it can be calculated if activating the heat pump actually saves energy or if operation of the heat pump consumes more energy than can be recovered.

In another advantageous embodiment, the heat pump comprises at least one compressor, a condenser, an evaporator, and another heat exchanger.

In yet another advantageous embodiment, the process water line is connected to or configured to be connected to a cold water main (source) and/or a thermal energy storage device to provide process water therefrom to the first and, consequently, also the second waste water heat recovery unit. This results in a particularly effective recovery of heat from the waste water to the process water.

In another preferred embodiment, the waste water heat recovery device comprises cleaning means configured to clean the first waste water heat recovery unit and/or the second waste water heat recovery unit. In particular, this can be achieved by flushing or purging the heat exchanger of the first waste water heat recovery unit and/or the (other) heat exchanger of the second waste water heat recovery unit.

In particular, the cleaning means may be configured to sequentially clean the two units, for instance in a first sequence the heat exchanger of the heat pump and in a second sequence the heat exchanger of the WWHRU1. This can be done by flushing clean/process water via backwash lines into the respective heat exchangers and draining, at least for the heat exchanger of the first waste water heat recovery unit, the cleaning water through a bypass drain line.

Therein, the waste water heat recovery device may also comprise triggering means, in particular triggering means with an overflow sensor for indicating an overflow in the waste water line, configured to automatically activate the cleaning means if a preset or presettable criterion is met. To this end, the waste water line may comprise an overflow box, eventually connected to a bypass line bypassing the WWHRU1 and/or WWHRU2. The overflow box is preferably also connected to the waste water line. The overflow sensor and/or the overflow box may be used to detect when heat exchangers get sludged, as the overflow box is installed in the waste water line upstream of the waste water heat recovery units in such a way that, when one or both of the waste water heat recovery units or their corresponding heat exchangers gets sludged, the waste water level inside the overflow box rises, and a triggering means, for example a floating element, triggers a switch. In such a case, the cleaning means will wait until the heat recovery session is over to then clean the two units, preferably in the sequential way described above.

In particular, the criterion may comprise an overflow signal of the overflow sensor and/or the passing of a preset time period. The latter serves to establish preset time intervals for cleaning the WWHRU1 and/or WWHRU2 on a regular basis and thereby prevent sludging. The former serves to clean the WWHRU1 and/or WWHRU2 when they are already at least partly sludged.

The prevention of sludging increases the efficiency of the waste water heat recovery device. To avoid undesired behaviors, a minimum time span between two cleaning cycles may be predefined by a factory setting. As each installation setting is unique, the cleaning means may consider the average time between two cleaning cycles and automatically report any anomalies, such as, for example, a heat exchanger sealed by an abnormal material, which may be detected by the overflow signal of the overflow sensor right after finishing the cleaning sequences defined above. In some cases, the automatic cleaning procedure is not sufficient, and the warm waste water heat recovery device requires the intervention of a technician. In order to prevent any false alarm due to the uniqueness of each case or installation scenario, a preset number of first cleaning cycles, for instance the first four cleaning cycles, can be used as calibration cycles for the system.

In another advantageous embodiment, the heat pump of the second waste water heat recovery unit is a ground source heat source. This gives the advantage that the heat pump may work in a particularly effective way.

Therein, the second waste water heat recovery unit may comprise an additional heat exchanger to transfer heat from the waste water to the heat pump. In particular, when the second waste water heat recovery unit is connected to or configured to be connected to further thermal loads, another additional heat exchanger may be part of the second waste water heat recovery unit to transfer heat from the heat pump to process water in the process line. These variants, in contrast to the direct heat transfer described above, may be referred to as indirect heat transfer from the waste water line to the process water line, which allows to add heat buffers and/or sources and/or sinks with their respective functions into the waste heat recovery process and enhance effectiveness, efficiency, and flexibility of the heat recovery process.

Another aspect relates to a method for recovering waste water heat comprising the method step of heating or preheating process water in a process water line by transferring heat from waste water in a waste water line to the process water by means of a heat exchanger in a first waste water heat recovery unit, the first waste water heat recovery unit being connected to the waste water line and to the process water line, with the first waste water heat recovery unit comprising an auxiliary pump to pump process water through the heat exchanger. Therein, the heating or preheating comprises, in a passive first mode of operation, transferring heat from the waste water in the waste water line to the process water in the process water line with deactivated auxiliary pump, and, in an active second mode of operation, transferring heat from the waste water in the waste water line to the process water in the process water line with activated auxiliary pump.

A further method step is evaluating if additional heat is to be transferred from the waste water to the process water based on a preset criterion such as the temperature of the waste water at a location upstream of a second waste water heat recovery unit, the second waste water heat recovery unit being connected to the waste water line downstream of a first waste water heat recovery unit and to the process water line downstream of the first waste water heat recovery unit, (in particular, also downstream of the WWRHU1) being higher than a preset or presettable temperature and/or the temperature of the waste water at a location downstream of the WWHRU2 being higher than a preset or presettable temperature.

If additional heat is to be transferred, the method also comprises further heating the process water in the process water line by transferring further heat from the waste water in the waste water line to the process water in the process water line by means of a heat pump in the WWHRU2.

Advantageous embodiments and advantages of the method to recover waste water heat correspond to the advantageous embodiments and advantages of the waste water heat recovery device.

The described device and method may result, for instance, in the behavior described in the following.

While the waste water heat recovery device is on standby, the temperature inside the (first) heat exchanger of the first waste water heat recovery unit and inside a second heat exchanger, which then is a heat exchanger of the heat pump of the second waste water heat recovery unit are similar to an indoor ambient temperature. A request for hot process water will mechanically make flow cold process water towards the heat exchangers.

Case of shower: If the request for hot process water corresponds to a shower taken, the waste water heat recovery device may behave as a passive heat recovery device. Then, the flow from the cold process water will go through each of the heat exchangers while waste hot water will be available. The auxiliary pump of the first waste water heat recovery unit and eventually the heat pump of the second waste water heat recovery unit may remain off because, due to the -in comparison to the amount of heat that can be absorbed by the process water flushing through the first heat exchanger-limited amount of heat available in the waste water and the usually short duration of a shower, activating the auxiliary pump and the heat pump will only increase electric consumption without worthwhile benefit for the heat recovery process.

Case of bath: If the request for hot process water corresponds to a bath to be taken, no waste hot water is available from the bath when the hot process water is required. When the bath over, the waste water heat recovery device will face a continuous flow of waste hot water, and meanwhile the water flow in the process water line will be null. To perform heat recovery and store energy in a thermo-storage device, for instance, the control system will then switch on the auxiliary pump and effectively recover heat from the waste water. After a transition time the temperature downstream the first waste water heat recovery unit and upstream the second waste water recovery unit will rise and may trigger the activation of the heat pump in the second waste water heat recovery unit. To ensure that switching on the heat pump results in overall saving energy, it is advantageous to make sure waste hot water is available for a preset or presettable minimal amount of time. In order to do so, a control unit may monitor a heat level of the thermal energy storage, and determine, if the quantity of domestic hot water taken from the thermal energy storage is over a defined threshold, that waste hot water is expected for longer than the minimal amount of time and activate the heat pump if waste hot water is detected in a preset time (such as one hour) after the drop of heat in the thermal energy storage.

Case of other appliances: If the request for hot water corresponds to other domestic hot water consumers like for example washing machines, dishwashers and the like, the energy involved for this process can be partially recovered using the first based water heat recovery unit only, as the amount of water used will not be enough to trigger the active heat-pump-driven heat recovery stage of the second waste water heat recovery unit.

So, efficiency of a waster water heat recovery can be optimized in a large variety of settings.

The features and combinations of features described above, as well as the features and combinations of features disclosed in the figures' description or the figures alone may not only be used alone or in the described combination, but also with other features or without some of the disclosed features without leaving the scope of the invention. Consequently, embodiments that are not explicitly shown and described by the figures but that can be construed by separately combining the individual features disclosed in the figures are also part of the invention. Therefore, embodiments and combinations of features that do not comprise all features of an originally formulated independent claim are to be regarded as disclosed. Furthermore, embodiments and combinations of features that differ from or extend beyond the combinations of features described by the dependencies of the claims are to be regarded as disclosed.

Exemplary embodiments are further described in the following by means of schematic drawings. Therein,
Fig. 1 shows an exemplary embodiment of a waste water heat recovery device, and
Fig. 2 another exemplary embodiment of a waste water heat recovery device.

In the figures, identical or functionally identical items have the same reference signs.

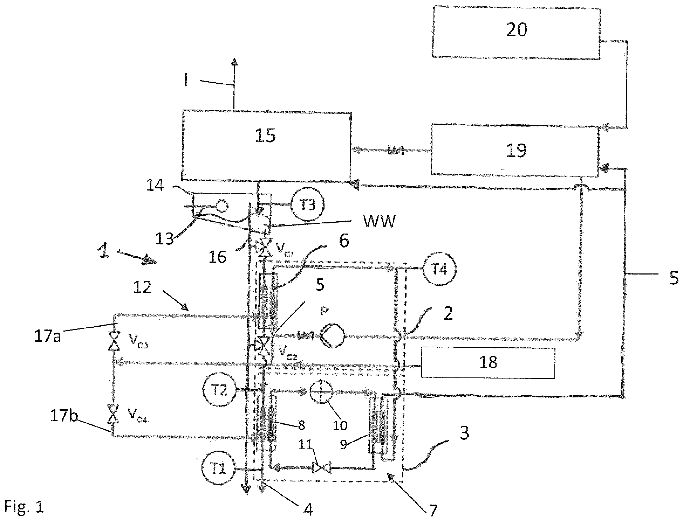

In Fig. 1, an exemplary embodiment of a waste water heat recovery device is shown. Said waste water heat recovery device 1 comprises first waste water heat recovery unit 2 and a second waste water heat recovery unit 3. Both first and second waste water heat recovery unit 2, 3 are connected to a waste water line 4 and a process water line 5. In both waste water line 4 and process water line 5, the second waste water heat recovery unit 3 is placed downstream of the first waste water heat recovery unit 2.

The first waste water heat recovery unit 2 comprises a (first) heat exchanger 6 to transfer heat from waste water in the waste water line 4 to process water in the process water line 5. Furthermore, the first waste water heat recovery unit 2 comprises an auxiliary pump P to pump process water through the heat exchanger 6. In the shown example, the pump is connected to a thermal energy storage device 19, which provides process water to the auxiliary pump P. Furthermore, in the present embodiment, the first waste water heat recovery unit 2 also comprises a temperature sensor T4 to monitor the temperature in the process water line 5 downstream of the heat exchanger 6.

The second waste water heat recovery unit 3 comprises a heat pump 7 with a cooling heat exchanger 8, to extract heat from the waste water line 4 and a heating heat exchanger 9, which works as a condenser here, to transfer the extracted heat to the process water line 5, as well as a compressor 10 and an evaporator 11. Furthermore, in the present example, the second waste water heat recovery unit 3 comprises two temperature sensors T2 and T1, where temperature sensor T2 measures the temperature of the waste water entering the second waste water heat recovery unit 3 upstream the cooling heat exchanger 8 and the temperature sensor T1 measures the temperature of the waste water leaving the second waste water heat recovery unit 3.

In the present example, the waste water recovery device 1 also comprises cleaning means 12 for cleaning the two waste water heat recovery units 2, 3. The cleaning means 12 are equipped with triggering means, which in the present case comprise an overflow sensor 13 in an overflow box 14 to automatically activate the cleaning means 12 if the overflow sensor 13 registers overflowing of the overflow box 14. The overflow box 14 is configured in a way that waste water WW from a domestic hot water user 15 such as a bath or a shower flows into the overflow box 14 before flowing into the waste water line 4. Also, in the present case, the cleaning means 12 comprise a cleaning/bypass drain line 16, which allows to bypass the waste water line 4 in case of an overflow.

In the present example, the cleaning means 12 also comprise to backwash lines 17a, 17b, that are connected to the first and second waste water heat recovery unit 2, 3, respectively, as well as to a cold main water source 18 in the present example. The cold main water source 18 also supplies the process water line 5 with cold process water in the present example. The backwash line 17a features a control valve V_{C3} to allow the cleaning of the first waste water heat recovery unit 2, and the second backwash line 17b comprises a corresponding control valve V_{C4} that can be opened to flush the second waste water heat recovery unit 3. In addition, the cleaning means 12 comprise further control valves V_{C1}, V_{C2} which connect the bypass plane line 16 with the waste water line 4 upstream of the first waste heat recovery unit 2 in case of control valve V_{C1} and downstream of the first waste water heat recovery unit 2 and upstream of the second waste water heat recovery unit 3 in case of control valve V_{C2}. Said control valves V_{C1} and V_{C2} are three-way valves in the present example in order to allow a selective bypassing of first and second waste water heat recovery unit 2, 3, respectively.

In the present example, the waste water heat recovery device 1 is connected to the cold main water source 18 and provides heated process water to the thermal energy storage device 19. From said thermal energy storage device 19, water is also provided to the auxiliary pump, which may then be fed into the heat exchanger 6 of the first waste water heat recover unit 2. Said auxiliary pump P may also be bypassed by a bypass (not shown) for providing process water from the thermal energy storage device 19 to the heat exchanger 6 with deactivated auxiliary pump P. The thermal energy storage device 19 itself receives hot water from a hot water production device 20, which may comprise a boiler or a heat pump, for instance. In the present example, the thermal energy storage device 19 provides, along with the process water line 5, water to the domestic hot water user 15. For the sake of completeness, it has to be pointed out that a significant fraction of the heat in the domestic hot water user 15 disappears as thermal loss I.

In the following, exemplary use cases for the waste water heat recovery device 1 are explained to deepen the understanding of the invention.

### i) Shower scenario, where the domestic hot water user 15 is a shower in use.

In a first phase, e.g. the first minute or so of the use of the shower, the device 1 remains passive. Because the domestic hot water user 15 is a shower, there is no need to switch on the auxiliary pump P and the conditions are not met yet to operate the second waste water heat recovery unit 3, it is the heat pump stage. In this situation, the device 1 may already recover about 12.5 kW of heat. The flow in the draining circuit, it is the waste water line 4, and the pre-heating circuit, it is the process water line 5, is the same, for instance 10 l/min. In this first phase, the cooling heat exchanger 8 of the heat pump 7 is warming up.

In such a setting, the temperature of the cool main water may be 10°C, the temperature at sensor T1 may be 10°C as well, the temperature at sensor T2 16°C, the temperature at sensor T3 36°C, and the temperature at sensor T4 30°C. Also, the temperature in the process water line downstream the second waste water heat recovery unit 3 may be 30°C.

In a second phase, the temperature at sensor T1 is raising, and when the preset temperature difference ΔT between the temperature at sensor T1 and a given minimum waste water drain temperature is at least a preset value of, for example, 10°C (which would correspond to 6 kW recovered thermal power under 10 l/min flow rate), the conditions are met to activate the heat pump 7. For instance, in such a setting the temperature at sensor T1 may raise to 16°C, which initiates the activation of the heat pump in the third phase. Note that the auxiliary pump P remains deactivated in this scenario, as the flow of process water through the heat exchanger 6 is sufficient for an effective transfer of heat from waste water to process water when the shower is in use.

In the third phase, the heat pump 7 may operate at full power and, exemplarily, be able to recover up to 17.5 kW of thermal energy with only 2 kW of electric consumption with an overall system COP of 8.75, assuming that the heat pump capacity is 5 kW, the operating temperature is between 2 and 15°C, and 2 kW of electric energy are used. To ensure heat pump efficiency, the heat pump may be activated only when the system is operated at a large scale. With an average shower lasting less than 6 minutes, for example, it may save more energy to not activate the heat pump for the limited time of four or five minutes of recovery. However, the system may also be adjusted to the individual use case, where it may save energy to activate the heat pump 7 for said limited amount of time or showers are lasting longer.

In the third phase, the temperature at sensor T1 may drop to 9°C, in the present example resulting in a temperature increase in the process water line 5 downstream of the second waste water heat recovery unit 3 from 30°C to 37°C.

### ii) Bath scenario, where the domestic hot water user 15 is a bath in use.

In case of the domestic hot water user 15 corresponding to a bath taken, it is advantageous to detect the taking of the bath by monitoring the thermal energy storage device 19. If the quantity of domestic hot water taken from the thermal energy storage is over a defined threshold, a "bath mode" may be activated and the following scenario may be realized.

In a first phase, when the bath tub plug is removed and hot waste water flushes down the waste water line 4, the temperature at sensor T3 will quickly rise. In this case, because the bath mode is activated, the auxiliary pump P is activated. This allows to transfer the heat of the waste water to the thermal energy storage device 19. Namely, in the current setting, there is no immediate need for heated process water and consequently without activating the auxiliary pump P, no process water would flow through the heat exchanger 6, severely limiting the amount of heat that can be recovered.

In a second phase, with some delay to the temperature rise at sensor T3, the temperature at sensor T2 will rise above a preset threshold and the heat pump 7 will be activated to increase the heat recovery power rate.

In a third phase, when the heat pump 7 has reached the nominal capacity power rate, the heat recovery power rate is at its maximum and the waste water heat recovery device 1 can operate until the bath is empty, which can be detected by a temperature drop at sensor T3, for example. Note that during the third phase, the temperature at sensor T2 may increase, which is due to the fact that the capacity of the heat exchanger 6 of the first waste water heat recover unit 2 decreases as the temperature of the thermal energy storage 19 rises.

In a fourth phase, when the bath is empty, both auxiliary pump P and heat pump 7 will be stopped.

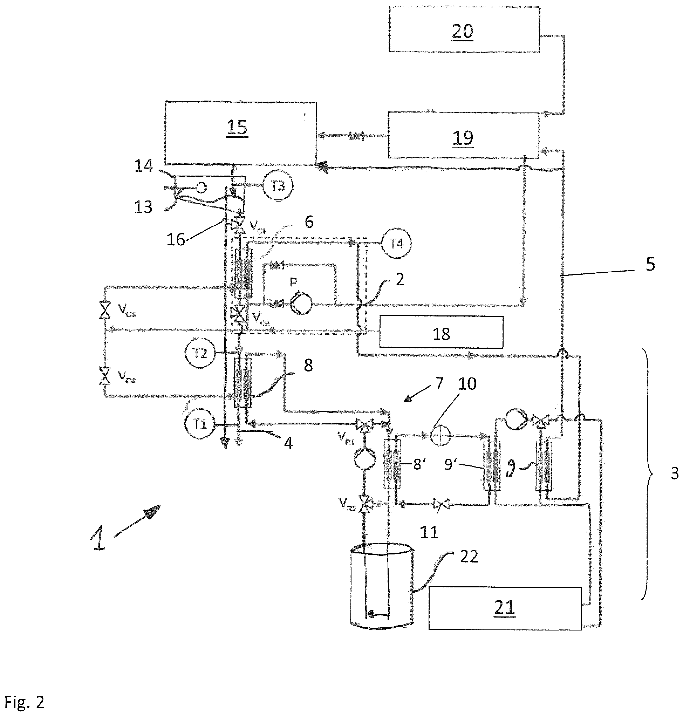

In Fig. 2 another example of a waste water heat recovery device 1 is shown. Therein, the heat pump 7 is a ground source heat pump, which increases efficiency.

The second waste water heat recovery unit 3 comprises additional heat exchangers 8', 9' that enable the indirect transfer of heat from the waste water line 4 to the process water line 5. The additional heat exchangers allow to extend the use of the waste water heat recovery device 1 to include further heat sources such as the bore hole 22 mentioned below or further heat sinks such as other domestic hot water users 21.

In the present example, control valves V_{R1} and V_{R2} as well as a corresponding pump may be used to switch the heat source from bore hole 22 only to either a serial combination of the bore hole and the cooling heat exchanger 8 extracting heat from the waste water line 4 when the operation temperature of the heat exchanger 8 is too low. In this case, as typical bore hole 22 operational temperatures are between 5 and 10°C, negative temperatures of the waste hot water at the position of the sensor T1, that is, downstream of the second waste water heat recovery unit 3 in the waste water line 4, will be avoided. Alternatively, if there is enough energy to be recovered in the waste water, the heat source can be switched to the heat exchanger 8 only alone. In this case, operation temperatures for the ground source heat pump 7 is higher and a higher COP can be expected compared to bore hole 22 only operation.

## Claims

1. A waste water heat recovery device (1), comprising
- a first waste water heat recovery unit (2) configured to be connected to a waste water line (4) and to a process water line (5), where the first waste water heat recovery unit (2) comprises a heat exchanger (6) to transfer heat from waste water (WW) in the waste water line (4) to process water in the process water line (5);
- a second waste water heat recovery unit (3) configured to be connected to the waste water line (4), downstream of the first waste water heat recovery unit (2), and to the process water line, downstream of the first waste water heat recovery unit (2), where the second waste water heat recovery unit (3) comprises a heat pump (7) to transfer heat from waste water (WW) in the waste water line (4) to process water in the process water line (5);
**characterized in that**
the first waste water heat recovery unit (2) comprises an auxiliary pump (P) to pump process water through the heat exchanger (6), where the first waste water heat recovery unit (2) is configured to, in a passive first mode of operation, transfer heat from waste water (WW) in the waste water line (4) to process water in the process water line (5) with deactivated auxiliary pump (P), and,
in an active second mode of operation, transfer heat from waste water (WW) in the waste water line (4) to process water in the process water line (5) with activated auxiliary pump (P), wherein
the first waste water heat recovery unit (2) is configured to automatically switch from the passive mode of operation to the active mode of operation if a preset or presettable criterion is met, the preset or presettable criterion comprising that
- a temperature of waste water (WW) downstream of the heat exchanger (6) is higher than a preset temperature; or that
- waste water (WW) is flowing down the waste water line (4) through the heat exchanger (6) for longer than a preset time; or that
- the waste water is flowing down the waste water line from a specific source.

2. The waste water heat recovery device (1) of claim 1,
**characterized in that**
the preset or presettable criterion comprises that
- a temperature of waste water (WW) downstream of the heat exchanger (6) is higher than a preset temperature; and that
- a temperature of waste water (WW) upstream of the heat exchanger (6) is higher than a preset temperature; and that
- waste water (WW) is flowing down the waste water line (4) through the heat exchanger (6) for longer than a preset time.

3. The waste water heat recovery device (1) of any of the preceding claims,
**characterized in that**
the second waste water heat recovery unit (3) is configured to activate the heat pump (7) only if another preset or presettable criterion is met, where the other criterion preferably comprises that a temperature of waste water (WW) downstream of the heat pump (7) is higher than a preset temperature and/or that a temperature of waste water (WW) upstream of the heat pump (7) is higher than a preset temperature.

4. The waste water heat recovery device (1) of any of the preceding claims,
**characterized in that**
the heat pump (7) comprises at least one compressor (10), a condenser, an evaporator (11), and another heat exchanger (8).

5. The waste water heat recovery device (1) of any of the preceding claims,
**characterized in that**
the process water line (5) is connected to or configured to be connected to a cold water main (18) and/or a thermal energy storage device (19) to provide process water thereof to the first waste water heat recovery unit (2).

6. The waste water heat recovery device (1) of any of the preceding claims,
**characterized by**
cleaning means (12) configured to clean the first waste water heat recovery unit (2)
and/or the second waste water heat recovery unit (3), in particular by flushing the heat exchanger (6) of the first waste water heat recovery unit (2) and/or the heat exchanger (8) of the second waste water heat recovery unit (3).

7. The waste water heat recovery device (1) of claim 6,
**characterized by**
triggering means, in particular triggering means comprising an overflow sensor (13) for indicating an overflow in the waste water line (4), configured to automatically activate the cleaning means (12) if a preset criterion is met, where, in particular, the criterion comprises an overflow signal of the overflow sensor (13) and/or the passing of a preset time period.

8. The waste water heat recovery device (1) of any of the preceding claims,
**characterized in that**
the heat pump (7) of the second waste water heat recovery unit (3) is a ground source heat pump.

9. A method to recover waste water heat, comprising the method steps of
a) heating process water in a process water line (5) by transferring heat from waste water (WW) in a waste water line (4) to the process water by means of a heat exchanger (6) in a first waste water heat recovery unit (2), the first waste water heat recovery unit (2) being connected to the waste water line (4) and to the process water line (5), with the first waste water heat recovery unit (2) comprising an auxiliary pump (P) to pump process water through the heat exchanger (6), wherein
the heating comprises:
- in a passive first mode of operation, transferring heat from the waste water (WW) to the process water with deactivated auxiliary pump (P), and,
- in an active second mode of operation, transferring heat from the waste water (WW) to the process water with activated auxiliary pump (P);
b) evaluating if additional heat is to be transferred from the waste water (WW) to the process water, and, if yes,
c) further heating the process water in the process water line (5) by transferring heat from the waste water (WW) to the process water by means of a heat pump (7) in a second waste water heat recovery unit (3), the second waste water heat recovery unit (3) being connected to the waste water line (4) downstream of the first waste water heat recovery unit (2) and to the process water line downstream of the first waste water heat recovery unit (2), wherein
the first waste water heat recovery unit (2) automatically switches from the passive mode of operation to the active mode of operation if a preset or presettable criterion is met, the preset or presettable criterion comprising that
- a temperature of waste water (WW) downstream of the heat exchanger (6) is higher than a preset temperature; or that
- waste water (WW) is flowing down the waste water line (4) through the heat exchanger (6) for longer than a preset time; or that
- the waste water is flowing down the waste water line from a specific source.

## Patentansprüche

1. Abwasserwärmerückgewinnungseinrichtung (1), umfassend
- eine erste Abwasserwärmerückgewinnungseinheit (2), die eingerichtet ist, mit einer Abwasserleitung (4) und einer Brauchwasserleitung (5) verbunden zu sein, wobei die erste Abwasserwärmerückgewinnungseinheit (2) einen Wärmetauscher (6) umfasst, um Wärme von Abwasser (WW) in der Abwasserleitung (4) an Brauchwasser in der Brauchwasserleitung (5) zu übertragen;
- eine zweite Abwasserwärmerückgewinnungseinheit (3), die eingerichtet ist, mit einer Abwasserleitung (4), stromabwärts der ersten Abwasserwärmerückgewinnungseinheit (2), und der Brauchwasserleitung, stromabwärts der ersten Abwasserwärmerückgewinnungseinheit (2), verbunden zu sein, wobei die zweite Abwasserwärmerückgewinnungseinheit (3) eine Wärmepumpe (7) umfasst, um Wärme von Abwasser (WW) in der Abwasserleitung (4) an Brauchwasser in der Brauchwasserleitung (5) zu übertragen;
**dadurch gekennzeichnet, dass**
die erste Abwasserwärmerückgewinnungseinheit (2) eine Hilfspumpe (P) umfasst, um Brauchwasser durch den Wärmetauscher (6) zu pumpen, wobei die erste Abwasserwärmerückgewinnungseinheit (2) eingerichtet ist, in einem passiven ersten Betriebsmodus mit deaktivierter Hilfspumpe (P) Wärme von Abwasser (WW) in der Abwasserleitung (4) an Brauchwasser in der Brauchwasserleitung (5) zu übertragen, und,
in einem aktiven zweiten Betriebsmodus mit aktivierter Hilfspumpe (P) Wärme von Abwasser (WW) in der Abwasserleitung (4) an Brauchwasser in der Brauchwasserleitung (5) zu übertragen, wobei
die erste Abwasserwärmerückgewinnungseinheit (2) eingerichtet ist, automatisch von dem passiven Betriebsmodus in den aktiven Betriebsmodus zu schalten, falls ein voreingestelltes oder voreinstellbares Kriterium erfüllt ist, wobei das voreingestellte oder voreinstellbare Kriterium umfasst, dass
- eine Temperatur des Abwassers (WW) stromabwärts des Wärmetauschers (6) höher ist als eine voreingestellte Temperatur; oder dass
- Abwasser (WW) länger als eine voreingestellte Zeit in der Abwasserleitung (4) durch den Wärmetauscher (6) fließt; oder dass
- das Abwasser aus einer bestimmten Quelle durch die Abwasserleitung fließt.

2. Abwasserwärmerückgewinnungseinrichtung (1) nach Anspruch 1,
**dadurch gekennzeichnet, dass**
das voreingestellte oder voreinstellbare Kriterium umfasst, dass
- eine Temperatur von Abwasser (WW) stromabwärts des Wärmetauschers (6) höher ist als eine voreingestellte Temperatur; und dass
- eine Temperatur von Abwasser (WW) stromaufwärts des Wärmetauschers (6) höher ist als eine voreingestellte Temperatur; und dass
- Abwasser (WW) länger als eine voreingestellte Zeit in der Abwasserleitung (4) durch den Wärmetauscher (6) fließt.

3. Abwasserwärmerückgewinnungseinrichtung (1) nach einem der vorangehenden Ansprüche,
**dadurch gekennzeichnet, dass**
die zweite Abwasserwärmerückgewinnungseinheit (3) eingerichtet ist, die Wärmepumpe (7) nur dann zu aktivieren, wenn ein anderes voreingestelltes oder voreinstellbares Kriterium erfüllt ist, wobei das andere Kriterium vorzugsweise umfasst, dass eine Temperatur von Abwasser (WW) stromabwärts der Wärmepumpe (7) höher ist als eine voreingestellte Temperatur und/oder dass eine Temperatur von Abwasser (WW) stromaufwärts der Wärmepumpe (7) höher ist als eine voreingestellte Temperatur.

4. Abwasserwärmerückgewinnungseinrichtung (1) nach einem der vorangehenden Ansprüche,
**dadurch gekennzeichnet, dass**
die Wärmepumpe (7) zumindest einen Verdichter (10), einen Kondensator, einen Verdampfer (11) und einen weiteren Wärmetauscher (8) umfasst.

5. Abwasserwärmerückgewinnungseinrichtung (1) nach einem der vorangehenden Ansprüche,
**dadurch gekennzeichnet, dass**
die Brauchwasserleitung (5) verbunden ist mit oder eingerichtet ist, verbunden zu werden mit einer Kaltwasserhauptleitung (18) und/oder einer Thermalenergiespeichereinrichtung (19), um deren Brauchwasser der ersten Abwasserwärmerückgewinnungseinheit (2) bereitzustellen.

6. Abwasserwärmerückgewinnungseinrichtung (1) nach einem der vorangehenden Ansprüche,
**gekennzeichnet durch**
ein Reinigungsmittel (12), das eingerichtet ist, die erste Abwasserwärmerückgewinnungseinheit (2)
und/oder die zweite Abwasserwärmerückgewinnungseinheit (3) insbesondere durch Spülen des Wärmetauschers (6) der ersten Abwasserwärmerückgewinnungseinheit (2) und/oder des Wärmetauschers (8) der zweiten Abwasserwärmerückgewinnungseinheit (3) zu reinigen.

7. Abwasserwärmerückgewinnungseinrichtung (1) nach Anspruch 6,
**gekennzeichnet durch**
ein Aktivierungsmittel, insbesondere ein Aktivierungsmittel mit einem Überlaufsensor (13) zum Angeben eines Überlaufs in der Abwasserleitung (4), das eingerichtet ist, das Reinigungsmittel (12) automatisch zu aktivieren, wenn ein voreingestelltes Kriterium erfüllt ist, wobei das Kriterium insbesondere ein Überlaufsignal des Überlaufsensors (13) und/oder das Verstreichen eines voreingestellten Zeitraums umfasst.

8. Abwasserwärmerückgewinnungseinrichtung (1) nach einem der vorangehenden Ansprüche,
**dadurch gekennzeichnet, dass**
die Wärmepumpe (7) der zweiten Abwasserwärmerückgewinnungseinheit (3) eine Erdwärmepumpe ist.

9. Verfahren zur Rückgewinnung von Abwasserwärme, umfassend die Verfahrensschritte des:
a) Erwärmens von Brauchwasser in einer Brauchwasserleitung (5) durch Übertragen von Wärme von Abwasser (WW) in einer Abwasserleitung (4) an das Brauchwasser mittels eines Wärmetauschers (6) in einer ersten Abwasserwärmerückgewinnungseinheit (2), wobei die erste Abwasserwärmerückgewinnungseinheit (2) mit der Abwasserleitung (4) und mit der Brauchwasserleitung (5) verbunden ist, wobei die erste Abwasserwärmerückgewinnungseinheit (2) eine Hilfspumpe (P) umfasst, um Abwasser durch den Wärmetauscher (6) zu pumpen,
wobei
das Erwärmen umfasst:
- in einem passiven ersten Betriebsmodus mit deaktivierter Hilfspumpe (P) Übertragen von Wärme vom Abwasser (WW) an das Brauchwasser, und,
- in einem aktiven zweiten Betriebsmodus mit aktivierter Hilfspumpe (P) Übertragen von Wärme vom Abwasser (WW) an das Brauchwasser;
b) Evaluieren, ob zusätzliche Wärme aus dem Abwasser (WW) auf das Brauchwasser übertragen werden soll, und, falls ja,
c) ferner Erwärmen des Brauchwassers in der Brauchwasserleitung (5) durch Übertragen von Wärme aus dem Abwasser (WW) auf das Brauchwasser mittels einer Wärmepumpe (7) in einer zweiten Abwasserwärmerückgewinnungseinheit (3), wobei die zweite Abwasserwärmerückgewinnungseinheit (3) mit der Abwasserleitung (4) stromabwärts der ersten Abwasserwärmerückgewinnungseinheit (2) und mit der Brauchwasserleitung stromabwärts der ersten Abwasserwärmerückgewinnungseinheit (2) verbunden ist, wobei
die erste Abwasserwärmerückgewinnungseinheit (2) automatisch vom passiven Betriebsmodus in den aktiven Betriebsmodus schaltet, wenn ein voreingestelltes oder voreinstellbares Kriterium erfüllt ist, wobei das voreingestellte oder voreinstellbare Kriterium umfasst, dass
- eine Temperatur des Abwassers (WW) stromabwärts des Wärmetauschers (6) höher ist als eine voreingestellte Temperatur; oder dass
- Abwasser (WW) länger als eine voreingestellte Zeit in der Abwasserleitung (4) durch den Wärmetauscher (6) fließt; oder dass
- das Abwasser aus einer bestimmten Quelle durch die Abwasserleitung fließt.

## Revendications

1. Dispositif de récupération de la chaleur des eaux usées (1), comprenant
- une première unité de récupération de la chaleur des eaux usées (2), configurée afin d'être connectée à une canalisation d'eaux usées (4) et à une canalisation d'eau de traitement (5), dans lequel la première unité de récupération de la chaleur des eaux usées (2) comprend un échangeur de chaleur (6) destiné à transférer la chaleur en provenance des eaux usées (WW) dans la canalisation d'eaux usées (4), vers l'eau de traitement dans la canalisation d'eau de traitement (5) ;
- une seconde unité de récupération de la chaleur des eaux usées (3), configurée afin d'être connectée à la canalisation d'eaux usées (4) en aval de la première unité de récupération de la chaleur des eaux usées (2), et à la canalisation d'eau de traitement, en aval de la première unité de récupération de la chaleur des eaux usées (2), dans lequel la seconde unité de récupération de la chaleur des eaux usées (3) comprend une pompe à chaleur (7) destinée à transférer la chaleur en provenance des eaux usées (WW) dans la canalisation d'eaux usées (4), vers l'eau de traitement dans la canalisation d'eau de traitement (5) ;
**caractérisé en ce que**
la première unité de récupération de la chaleur des eaux usées (2) comprend une pompe auxiliaire (P) destinée à pomper l'eau de traitement à travers l'échangeur de chaleur (6), dans lequel la première unité de récupération de la chaleur des eaux usées (2) est configurée afin de, dans un premier mode de fonctionnement passif, transférer la chaleur en provenance des eaux usées (WW) dans la canalisation d'eaux usées (4) vers l'eau de traitement dans la canalisation d'eau de traitement (5), la pompe auxiliaire (P) étant désactivée, et,
dans un second mode de fonctionnement actif, transférer la chaleur en provenance des eaux usées (WW) dans la canalisation d'eaux usées (4) vers l'eau de traitement dans la canalisation d'eau de traitement (5), la pompe auxiliaire (P) étant activée, dans lequel
la première unité de récupération de la chaleur des eaux usées (2) est configurée afin de commuter automatiquement du mode de fonctionnement passif vers le mode de fonctionnement actif, si un critère préréglé ou pouvant être préréglé est rempli, le critère préréglé ou pouvant être préréglé comprenant :
- la température des eaux usées (WW) en aval de l'échangeur de chaleur (6), est supérieure à une température préréglée ; ou
- les eaux usées (WW) circulent dans la canalisation d'eaux usées (4) à travers l'échangeur de chaleur (6) pendant plus longtemps qu'une période de temps préréglée ; ou
- les eaux usées circulent dans la canalisation d'eaux usées en provenance d'une source spécifique.

2. Dispositif de récupération de la chaleur des eaux usées (1) selon la revendication 1,
**caractérisé en ce que**
le critère préréglé ou pouvant être préréglé comprend :
- la température des eaux usées (WW) en aval de l'échangeur de chaleur (6), est supérieure à une température préréglée ; et
- la température des eaux usées (WW) en amont de l'échangeur de chaleur (6) est supérieure à une température préréglée ; et
- les eaux usées (WW) circulent dans la canalisation d'eaux usées (4) à travers l'échangeur de chaleur (6) pendant plus longtemps qu'une période de temps préréglée.

3. Dispositif de récupération de la chaleur des eaux usées (1) selon l'une quelconque des revendications précédentes,
**caractérisé en ce que**
la seconde unité de récupération de la chaleur des eaux usées (3) est configurée afin d'actionner la pompe à chaleur (7) seulement si un autre critère préréglé ou pouvant être préréglé est rempli, dans lequel l'autre critère comprend de préférence celui selon lequel la température des eaux usées (WW) en aval de la pompe à chaleur (7), est supérieure à une température préréglée, et / ou la température des eaux usées (WW) en amont de la pompe à chaleur (7), est supérieure à une température préréglée.

4. Dispositif de récupération de la chaleur des eaux usées (1) selon l'une quelconque des revendications précédentes,
**caractérisé en ce que**
la pompe à chaleur (7) comprend au moins un compresseur (10), un condenseur, un évaporateur (11), et un autre échangeur de chaleur (8).

5. Dispositif de récupération de la chaleur des eaux usées (1) selon l'une quelconque des revendications précédentes,
**caractérisé en ce que**
la canalisation d'eau de traitement (5) est connectée, ou est configurée afin d'être connectée, à une canalisation d'eau froide principale (18) et / ou à un dispositif de stockage d'énergie thermique (19), afin de fournir l'eau de traitement à la première unité de récupération de la chaleur des eaux usées (2).

6. Dispositif de récupération de la chaleur des eaux usées (1) selon l'une quelconque des revendications précédentes,
**caractérisé par**
des moyens de nettoyage (12) configurés afin de nettoyer la première unité de récupération de la chaleur des eaux usées (2)
et / ou la seconde unité de récupération de la chaleur des eaux usées (3), en particulier en vidangeant l'échangeur de chaleur (6) de la première unité de récupération de la chaleur des eaux usées (2), et / ou l'échangeur de chaleur (8) de la seconde unité de récupération de la chaleur des eaux usées (3).

7. Dispositif de récupération de la chaleur des eaux usées (1) selon la revendication 6,
**caractérisé par**
des moyens de déclenchement, en particulier des moyens de déclenchement qui comprennent un capteur de dépassement de la capacité (13), destiné à indiquer un dépassement de la capacité dans la canalisation d'eaux usées (4), configurés afin d'activer automatiquement les moyens de nettoyage (12) si un critère préréglé est rempli, où, en particulier, le critère comprend un signal de dépassement de la capacité du capteur de dépassement de la capacité (13), et / ou le dépassement d'une période de temps préréglée.

8. Dispositif de récupération de la chaleur des eaux usées (1) selon l'une quelconque des revendications précédentes,
**caractérisé en ce que**
la pompe à chaleur (7) de la seconde unité de récupération de la chaleur des eaux usées (3) est une pompe à chaleur géothermique.

9. Procédé destiné à récupérer la chaleur des eaux usées, comprenant les étapes suivantes du procédé
a) chauffer l'eau de traitement dans une canalisation d'eau de traitement (5), en transférant la chaleur à partir des eaux usées (WW) dans une canalisation d'eaux usées (4), vers l'eau de traitement, au moyen d'un agencement d'échangeur de chaleur (6) dans une première unité de récupération de la chaleur des eaux usées (2), la première unité de récupération de la chaleur des eaux usées (2) étant connectée à la canalisation d'eaux usées (4) et à la canalisation d'eau de traitement (5), la première unité de récupération de la chaleur des eaux usées (2) comprenant une pompe auxiliaire (P) destinée à pomper l'eau de traitement à travers l'échangeur de chaleur (6),
dans lequel
le chauffage comprend les étapes suivantes :
- dans un premier mode de fonctionnement passif, transférer la chaleur à partir des eaux usées (WW) vers l'eau de traitement, la pompe auxiliaire étant désactivée (P), et,
- dans un second mode de fonctionnement actif, transférer la chaleur à partir des eaux usées (WW) vers l'eau de traitement, la pompe auxiliaire étant activée (P) ;
b) évaluer si une chaleur supplémentaire doit être transférée à partir des eaux usées (WW) vers l'eau de traitement, et, si la réponse est oui,
c) chauffer davantage l'eau de traitement dans la canalisation d'eau de traitement (5), en transférant la chaleur à partir des eaux usées (WW) vers l'eau de traitement, au moyen d'une pompe à chaleur (7) dans une seconde unité de récupération de la chaleur des eaux usées (3), la seconde unité de récupération de la chaleur des eaux usées (3) étant connectée à la canalisation d'eaux usées (4) en aval de la première unité de récupération de la chaleur des eaux usées (2), et à la canalisation d'eau de traitement en aval de la première unité de récupération de la chaleur des eaux usées (2), dans lequel
la première unité de récupération de la chaleur des eaux usées (2) commute automatiquement du mode de fonctionnement passif vers le mode de fonctionnement actif, si un critère préréglé ou pouvant être préréglé, est rempli, le critère préréglé ou pouvant être préréglé comprenant :
- la température des eaux usées (WW) en aval de l'échangeur de chaleur (6), est supérieure à une température préréglée ; ou
- les eaux usées (WW) circulent dans la canalisation d'eaux usées (4) à travers l'échangeur de chaleur (6) pendant plus longtemps qu'une période de temps préréglée ; ou
- les eaux usées circulent dans la canalisation d'eaux usées en provenance d'une source spécifique.
